# EUROPEAN PATENT APPLICATION

(11) **EP 0 660 571 A1**
(43) Date of publication of application: **28.06.1995**
(21) Application number: 94108867.6
(22) Date of filing: 09.06.1994
(51) Int. Cl.: H04M 1/66, H04M 1/65

(54) **Automatic call screening for answering machines and smart telephones**

(30) Priority: 15.06.1993 US 77000
(71) Applicant: TEXAS INSTRUMENTS INCORPORATED, Dallas Texas 75265 (US)
(72) Inventor: Choate,William C., Dallas, Texas 75240 (US)
(74) Representative: Schwepfinger, Karl-Heinz, Dipl.-Ing.

(57) **Abstract**

A telephone line interface (100) receives a telephone call from a telephone user. The ring detector (110) detects a ring of the phone of the customer. The ring detector (110) activates the processor to play a predetermined first message (136) to the user. The user provides a dialed special access number (SPAN) which is compared to storage SPANs to determine if the customer is an authorized customer. If the dialed SPAN matches the processor (120) activates the customer's telephone (160) if the dialed SPAN is authorized; otherwise, the processor (120) directs the telephone user through a second message (138) to record a message which is placed into memory (130).

## Description

### Technical Field of the Invention

This invention relates to telephone equipment and, more particularly, to a control system for a telephone line that performs switching and supervisor functions to enhance the functions of telephone stations connected to the telephone line.

### Background of the Invention

Equipment has frequently been provided in prior art telephone systems for automatically answering calls to customer stations when the called party is not available to do so. Such equipment is usually arranged to answer each call with a recorded announcement, to record any message from the caller and afterward to playback the recorded messages to the called customer. A variety of other features is usually supplied by this equipment, for example, the customer generally is permitted to record and check his own answer announcement and to repeat and skip certain passages during the playback period.

U.S. Patent 4,049,915 to Danner discloses a telephone answering and recording system employing a single line in normal operation between the customer's telephone equipment and the centrally located answering and recording equipment. The telephone answering and recording system includes circuitry for counting incoming ringing signals before the recording of incoming messages begins.

U.S. Patent 4,527,013 to Hardy discloses a telephone answering system capable of accommodating geographically dispersed customer stations and obliterating the need for any dedicated concentrators or distributors.

U.S. Patent 4,807,279 to McClure discloses an apparatus and method for remotely cancelling or reprogramming the call-forwarding service provided by the telephone company on the customer/user's telephone line.

U.S. Patent 4,893,335 to Fuller discloses a detector for detecting signals on the line, a signal generator for producing and applying control signals to the telephone line, memory for storing electronic signals, and a central processor for monitoring signals on the line as detected by the detector, accessing the memory to produce and apply control signals to the signal generator.

U.S. Patent 4,924,501 to Cheeseman discloses that a detection process involves a training process and the recognition process. The training process extracts amplitude and timing characteristics of the first part of receival signal from a dialing instrument. These characteristics are then used to form a template for recognition of subsequent dialed digits.

U.S. Patent 5,029,198 to Walpole discloses a telephone call responding system which allows the user to respond to an incoming call without actually speaking to the caller personally, and, if desired, without having to pick up the telephone to answer a call.

U.S. Patent 5,060,255 to Brown discloses a method and apparatus for affecting timed-do-not-disturb services in telephone networks.

U.S. Patent 5,093,854 to Sucato discloses a series of storage units simulating the capacity of answering machines connected to a computer-operated dispatch unit connected to a telephone system. The storage units are coded to represent calendar days.

U.S. Patent 5,157,174 to Spicer discloses a method for collecting and disseminating available load information for the trucking industry, utilizing a telephone-accessible controller which enables providers of loads to record into memory voiced messages related to loads currently available for shipment by truck.

The above-mentioned patents do not eliminate the need for unlisted numbers. Additionally, the above-mentioned patents do not provide a method or apparatus for, and in particular, do not screen calls so that only a pre-selected group of the incoming calls can determine if the customer is at home through the unanswered telephone.

### Summary of the Invention

The present invention overcomes the deficiencies of the prior art in that incoming calls are screened so that a pre-selected group of callers can determine if the customer is at home through the telephone. Thus, the present invention discourages burglars from determining if someone is at home through the unanswered phone.

Additionally, the present invention prevents unwanted solicitations through the phone by providing these solicitors from having direct access to the phone.

Further, by providing an authorized list of callers and the apparatus for changing the authorized list, additional valid callers can be added to the authorized list while other previous valid callers who call are no longer wanted on the list can be removed from the list.

Further, the present invention provides a personalized message for valid callers.

These and other features of the invention that will be apparent to those skilled in the art from the following detailed description of the invention, taken together with the accompanying drawings.

### Description of the Drawings

Fig. 1 is a block diagram of the present invention; and
Fig. 2 is illustrates the operation of the present invention.

### Detailed Description of the Invention

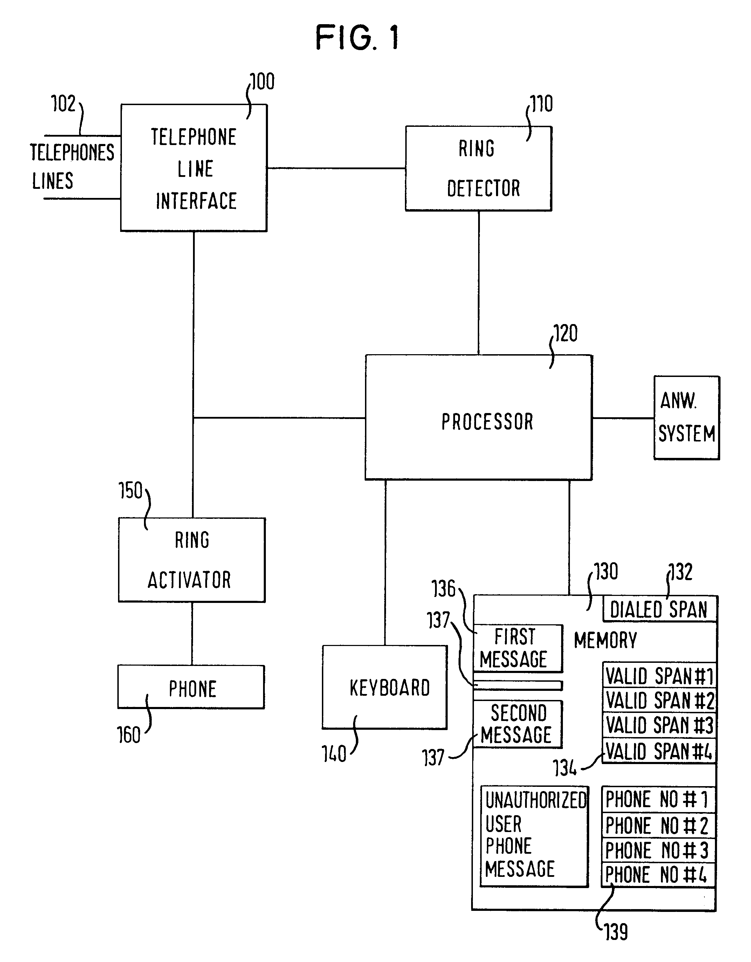

As illustrated in Fig. 1, a telephone line interface (100) is coupled to the telephone lines (102) to receive telephone calls. The telephone line interface is coupled to ring detector (110) to detect a ring signal on the telephone line of the customer. The ring detector (110) is coupled to and activates the processor (120).

A keyboard (140) is coupled to processor (120), for example, a microprocessor. The memory (130) includes a file including a list of valid special access numbers SPANS (134) or predetermined access number which have been stored and could be selected form a RAM, ROM, tape etc. The list is created and maintained by keyboard (140). A user creates the list by inputting the valid SPAN through the keyboard (140) to memory (130). If the user desires to add or subtract from the valid SPAN (134), the list is changed by the keyboard (140). Although a separate keyboard is used to create and update the list of valid SPAN, a push button phone such as phone (160) could be used.

In addition to storing the valid SPAN (134), a phone number that corresponds to the valid SPAN (134) is stored in a second file (139) in the memory (130).

The processor (120) is coupled to both the telephone line interface (100) and the ring activator (150) through a bus. The ring activator (150) is coupled to phone (160) to activate the phone to ring.

The processor (120) is coupled to and obtains from memory (130) a first message (136) to play through the telephone line interface (100) and the telephone lines (102) to the caller after the ring signal has been detected. This first message (136), for example, instructs the caller to dial in a special access number (SPAN). The first message (136) could contain other messages. The caller then dials in a dialed SPAN which could be a predetermined number of digits, for example, four to seven digits through a push button phone. This particular SPAN has been previously assigned to the caller to provide identification to the user that the caller has been previously approved by the user. The dialed SPAN signal is transmitted and received by the processor (120) in the form of dial pulse signal data. The dialed SPAN (132) is stored in memory (130) in an additional file by the processor (120) so that a corresponding phone number of the caller can be redialed at a subsequent time. The memory (130) additionally includes a file 139 of telephone numbers corresponding to valid SPAN. Thus, by comparing the dialed SPAN (132) with the valid SPAN (134) and obtaining the corresponding phone number (139) the caller can be recalled by the user. The processor (120) compares the dialed SPAN (132) with the valid SPANs (134). If the dialed SPAN (132) and the valid SPAN (134) are equal, the processor (120) activates the ring activator (150) to ring the phone (160) of the user with the same or a different/distinctive ring. Thus, the user of the phone (160) knows that a valid SPAN has been dialed and the caller has been pre-authorized so that the customer's phone may be rung. If the phone is not answered within a predetermined number of rings or a predetermined time period, the processor (120) retains the dialed SPAN (132) so that the user can call the caller.

Alternatively, if a valid SPAN (134) is received, the called could receive a personalized message stored in memory (130) such as 'Hi Sis, I am at Mom's.'

However, if the caller dials in a dialed SPAN which is not found within the file of valid SPAN (134) or the user is using a rotary-type phone, the processor (120) obtains a second message from memory (130) to play to the user, instructing the caller to leave a message for the user, and the phone does not ring. The processor (120) places the message of the unauthorized caller into memory (130) for access by the user at a later time.

As an alternative, the processor (120) could activate or couple the answering system to record this message.

If the phone has been previously rung as a result of a dialed SPAN being a valid SPAN and the user did answer the phone (160), the processor (120) is activated to replay the stored message. The user may request through the keyboard (140) or telephone (160) to activate the processor (120) to obtain the dialed SPAN (132) and compare the dialed SPAN with the valid SPAN to obtain the corresponding phone number stored in file (139) and use the phone number to dial the phone (160) so that the user can call the caller.

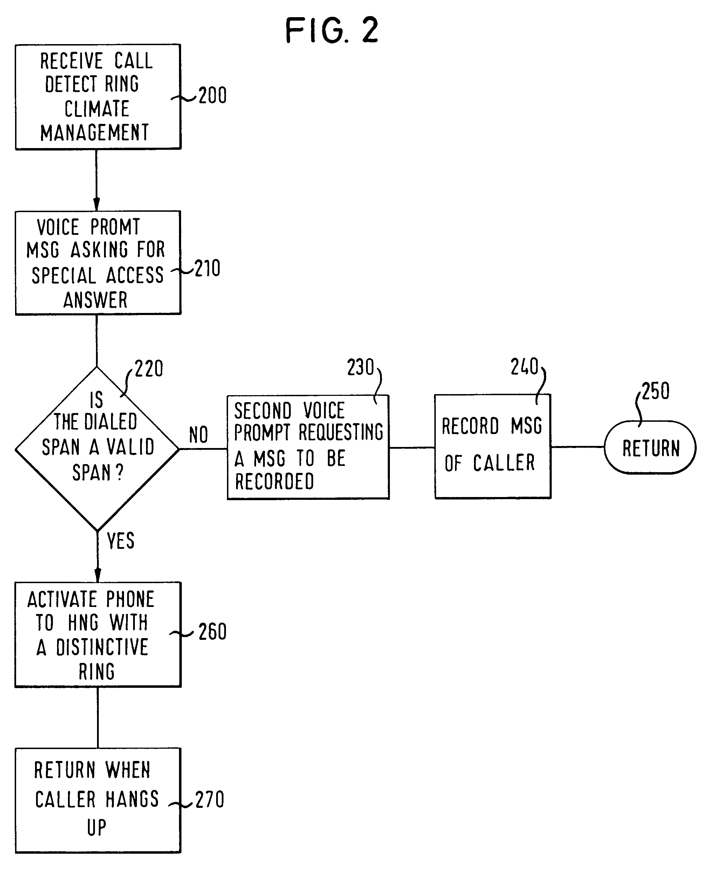

Fig. 2 illustrates the sequence of steps and illustrates the operation of the present invention. In Step 200, a call is received by the telephone line interface (100). The ring detector (110) detects a ring signal of the phone of the customer and activates the processor (120) to play the first message (136) from memory (130) to the customer/user. The first message requests through a voice prompt in Step 210 the telephone caller to input a dialed SPAN of the user for identification. The user hears the recorded message, and if the user is using a push button phone, the user inputs the dialed SPAN which is transmitted to telephone interface (100) and to the processor (120). The processor (120) receives the dialed SPAN and stores it in memory (130). Additionally, the processor (120) compares the dialed SPAN with the valid SPANs found in file (134) which have been previously stored in memory (130). If in Step 220, the processor (120) determines if the dialed SPAN is a valid SPAN if the dialed SPAN corresponding to the valid SPAN, the processor (120) activates the ring activator (150) so that the phone (160) of the user is activated with a normal or distinctive ring in Step 260.

If the processor (120) does not find a valid SPAN in file (134) by comparison with the dialed SPAN or the processor (100) does not receive any dialed SPAN within a predetermined time, the processor obtains from memory (130) a second message (138) to play to the telephone caller. Exemplary, this second message instructs the telephone caller to leave a message as in Step 230. The telephone caller gives a message which the processor (120) stores in memory (130), as illustrated in Step 140. Next, the return step is activated as illustrated in Step 240.

### Other Embodiments

Although the present invention and its advantages have been described in detail, it should be understood that various changes, substitutions and alterations can be made herein without departing from the spirit and scope of the invention as defined by the appended claims.

## Claims

1. An interface between a telephone of a user and a telephone line for screening calls for the user, comprising:
circuitry for sensing a ring signal on the telephone line of the user, and producing an activation signal indication thereof;
a processor arrangement including a memory responsive to said activation signal to transmit a first message from said memory to said telephone line; and
wherein said processor activates the telephone of the user to ring when one of a plurality of predetermined access numbers as been received from a caller.

2. An interface between a telephone of a user and a telephoned line as defined in claim 1, wherein said processor stores said received access number in said memory.

3. An interface between a telephone of a user and a telephone line as defined in claim 1 and claim 2, wherein said processor establishes a correspondence between said received access number and a telephone number of said caller.

4. An interface between a telephone of a user and a telephone line as defined in any preceding claim, wherein said processor compares said predetermined access numbers with an access number inputted by the caller.

5. An interface between a telephone of a user and a telephone line as defined in claim 4, wherein said processor transmits a second message to said caller when said access number is not found among said plurality of predetermined access numbers.

6. An interface between a telephone of a user and a telephone line as defined in any preceding claim, wherein said interface further comprises a keyboard to input said predetermined access numbers.

7. A method for interfacing between a telephone of a user and a telephone line for screening calls from the user, comprising the steps of:
sensing a ring signal on the telephone line of the user;
generating an activator signal indicative of said ring signal;
responding to said activator signal by transmitting a first message to a caller; and
activating the telephone of said user to ring if one of a plurality of predetermined access numbers is returned by said caller.

8. A method as in claim 7, wherein said method further comprises the step of storing said received access number in a memory.

9. A method as in claim 7 or claim 8, wherein said method further comprises the step of establishing a correspondence between said received access number and a telephone number of said caller.

10. A method as in claim 7, claim 8 or claim 9, wherein said method further comprises the step of comparing said received access number with an access number provided by said caller.

11. A method as in any of claims 7 to 10, wherein said method further comprises the step of transmitting a recorded message to said caller when said access number is not among said predetermined access numbers.

12. A method as claimed in any of claims 7 to 11, wherein said method further comprises the step of inputting said predetermined access numbers to said memory by a keyboard.
